# EUROPEAN PATENT APPLICATION

(11) **EP 4 782 811 A1**
(43) Date of publication of application: **29.07.2026**
(21) Application number: 24891123.2
(22) Date of filing: 09.10.2024
(51) Int. Cl.: G01N 1/31

(54) **SAMPLE TREATMENT DEVICE**

(30) Priority: 13.11.2023 JP 2023192954
(71) Applicant: Hitachi High-Tech Corporation, Minato-ku Tokyo 105-6409 (JP)
(72) Inventor: MATSUBARA, Shigeki, Tokyo 105-6409 (JP)
(74) Representative: Strehl & Partner mbB
(86) International application number: PCT/JP2024/036191
(87) International publication number: WO 2025/105081

(57) **Abstract**

Provided is a sample processing device capable of automatically preventing drying or evaporation of a sample even when the sample after a staining process is left for a long time. A sample processing device 100 includes a staining unit 30 configured to perform a staining process on a sample placed on a glass slide 1; a stage 32 configured to allow the glass slide 1 to be placed; a temperature sensor 40 provided around the stage 32; and a control unit C0 electrically connected to the stage 32 and the temperature sensor 40. The stage 32 includes a temperature adjustment mechanism configured to change a temperature of the stage 32. When the glass slide 1 for which the staining process is ended in the staining unit 30 is left on the stage 32, the control unit C0 controls the temperature of the stage 32 such that the temperature of the stage 32 is lower than a temperature detected by the temperature sensor 40.

## Description

### Technical Field

The present invention relates to a sample processing device, and more particularly to a sample processing device including a stage on which a glass slide is placed.

### Background Art

In order to perform a pathological examination, first, a biological sample such as tissue or blood is processed to prepare a glass slide for microscopic observation, and the sample on the glass slide is stained. Thereafter, the pathological examination is performed by microscopically observing the stained sample.

In general, in the preparation of the sample glass slide for the pathological examination, after the sample is stained, a dehydration process for replacing water contained in the sample with an organic solvent and a coverslipping process for placing a cover glass on the sample after the dehydration process are performed. Examples of sample staining methods include hematoxylin-eosin staining (HE staining), immunohistochemistry staining (IHC staining), and In-situ hybridization staining (ISH staining).

Among these staining methods, the number of glass slides to be subjected to a staining process by the HE staining is the largest, and most glass slides on which a tissue sample is placed are stained by the HE staining. Therefore, some automatic staining devices for the HE staining can automatically perform all of the staining process, the dehydration process, and the coverslipping process by connecting an automatic coverslipping device.

However, in the IHC staining and the ISH staining in which the number of glass slides to be subjected to the staining process is relatively small, there is no device capable of automatically performing the staining to the coverslipping, and it is necessary to remove the glass slide from the automatic staining device after the staining process in the automatic staining device and separately perform the dehydration process and the coverslipping process.

PTL 1 and PTL 2 disclose an automatic processing device capable of moving a substrate holder (accommodation unit) on which a sample is placed to each processing position.

### Citation List

### Patent Literature

PTL 1: JP2010-533299A
PTL 2: JP2013-68612A

### Summary of Invention

### Technical Problem

In the IHC staining, for example, 2 hours to 3 hours are required until the staining process is completed. In addition, the ISH staining requires a longer time. For example, an automatic staining device may be used to start the staining process in the evening, finish the staining process at night, and remove the stained glass slide from the automatic staining device in the next morning. The glass slide for which the staining process is started in the evening on Friday is removed in the morning on the third day after Saturday and Sunday. When Friday or Monday is a holiday, the glass slide is removed in the morning of the fourth day after three consecutive holidays.

In such a case, the glass slide on which the sample is placed is left on the automatic staining device for 50 hours to 70 hours or more after the staining process is ended. Therefore, moisture contained in the tissue or cells in the sample is evaporated and dried, and thus the sample cannot maintain an original form thereof and is in a state unsuitable for microscopic observation.

In an automatic staining device for the IHC staining or the ISH staining, an excessive amount of buffer liquid is placed on a glass slide in order to prevent drying of a sample, or mineral oil is placed on a glass slide in order to prevent evaporation of a sample. However, in these measures, when an operator removes the glass slide, it is necessary to perform an operation of removing the liquid, such as washing away the oil. Therefore, there is a problem that an operation for preventing drying or evaporation of the sample is complicated.

A main object of the present application is to provide a sample processing device capable of automatically preventing drying or evaporation of a sample even when the sample after a staining process is left for a long time.

Other technical problems and novel features will become apparent from description of the present description and the accompanying drawings.

### Solution to Problem

A sample processing device according to an embodiment includes: a staining unit configured to perform a staining process on a sample placed on a glass slide; a stage configured to allow the glass slide to be placed; a temperature sensor provided around the stage; and a control unit electrically connected to the stage and the temperature sensor. The stage includes a temperature adjustment mechanism configured to change a temperature of the stage, and when the glass slide for which the staining process is ended in the staining unit is left on the stage, the control unit controls the temperature of the stage such that the temperature of the stage is lower than a temperature detected by the temperature sensor.

A sample processing device according to an embodiment includes: a staining unit configured to perform a staining process on a sample placed on a glass slide; a storage unit configured to store the glass slide after the staining process is performed; a stage provided inside the storage unit; a tray provided on the stage and configured to allow the glass slide to be mounted; a temperature sensor provided around the stage; and a control unit electrically connected to the stage and the temperature sensor. The stage includes a temperature adjustment mechanism configured to change a temperature of the stage, and the control unit controls the temperature of the stage such that the temperature of the stage is lower than a temperature detected by the temperature sensor.

### Advantageous Effects of Invention

According to the sample processing device in the embodiment, even when the sample after the staining process is left for a long time, drying or evaporation of the sample can be automatically prevented.

### Brief Description of Drawings

[FIG. 1] FIG. 1 is a plan view showing an outline of a sample processing device according to Embodiment 1.
[FIG. 2] FIG. 2 is a front view showing an outline of the sample processing device according to Embodiment 1.
[FIG. 3] FIG. 3 is a cross-sectional view showing an example of a configuration of a disk according to Embodiment 1.
[FIG. 4] FIG. 4 is a schematic diagram showing a system of the sample processing device according to Embodiment 1.
[FIG. 5] FIG. 5 is a table showing protocols used in a staining process according to Embodiment 1.
[FIG. 6] FIG. 6 is a flowchart showing a staining process method according to Embodiment 1.
[FIG. 7] FIG. 7 is a plan view showing a supply unit and a storage unit according to Embodiment 2.
[FIG. 8] FIG. 8 is a flowchart showing a staining process method according to Embodiment 2.
[FIG. 9] FIG. 9 is a plan view showing an outline of a staining unit according to Embodiment 3.

### Description of Embodiments

Hereinafter, embodiments will be described in detail with reference to the drawings. In all the drawings for illustrating the embodiments, members having the same function are denoted by the same reference sign, and repeated description thereof will be omitted. In the following embodiments, the description of the same or similar parts will not be repeated in principle unless particularly necessary.

An X direction, a Y direction, and a Z direction to be described in the present application intersect with one another and are orthogonal to one another. In the present application, a Z1 direction is described as an upper direction of a certain structure. Expressions such as "plan view" used in the present application mean that a surface formed by an X1 direction or an X2 direction and a Y1 direction or a Y2 direction is defined as a "plane" and the "plane" is viewed from the Z1 direction or a Z2 direction.

### (Embodiment 1)

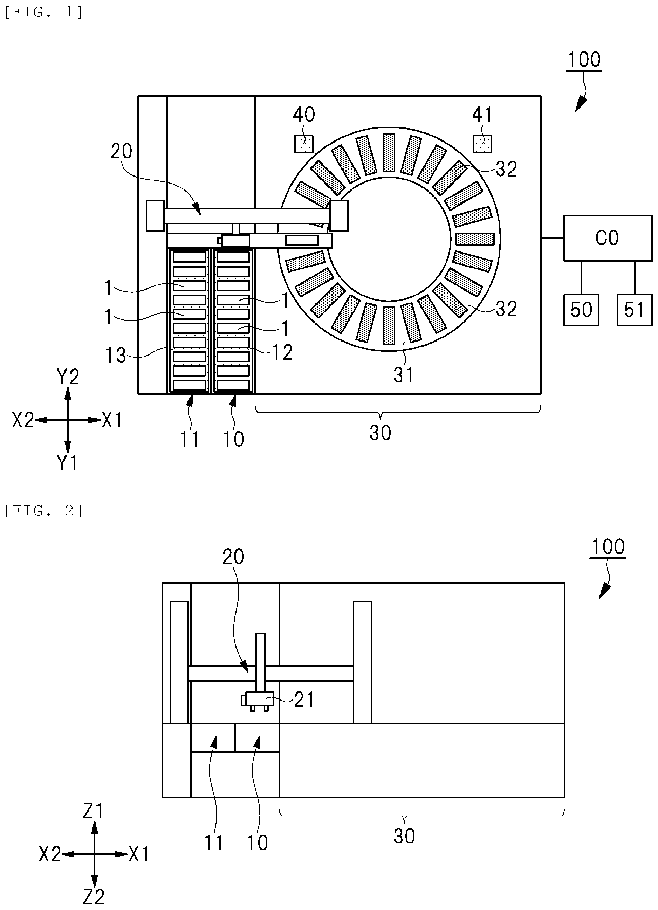

Hereinafter, a sample processing device 100 according to Embodiment 1 will be described with reference to FIGS. 1 to 4. A sample is placed on a glass slide 1 to be used in Embodiment 1. The sample is, for example, a biological sample such as a tissue used in a pathological examination. In addition, in the following description, an expression such as "performing a staining process on the glass slide 1" means "performing a staining process on the sample on the glass slide 1".

As shown in FIGS. 1 and 2, the sample processing device 100 includes a supply unit 10, a storage unit 11, a conveying unit 20, a staining unit 30, a storage unit 50, and an operation unit 51.

The supply unit 10 stores the glass slide 1 before the staining process is performed. A tray 12 is provided inside the supply unit 10. A plurality of glass slides 1 can be mounted on the tray 12. When a new staining process is performed, the tray 12 is moved in the Y1 direction, a new glass slide 1 is mounted on the tray 12, and the tray 12 is moved in the Y2 direction.

The storage unit 11 stores the glass slide 1 after the staining process is performed. A tray 13 is provided inside the storage unit 11. A plurality of glass slides 1 can be mounted on the tray 13. When the glass slide 1 after the staining process is collected, the tray 13 is moved in the Y1 direction, the glass slide 1 after the staining process is removed from the tray 13, and the tray 13 is moved in the Y2 direction.

The conveying unit 20 conveys the glass slide 1. The conveying unit 20 includes a grip portion 21 capable of gripping the glass slide 1. For example, the conveying unit 20 can carry the glass slide 1 from the supply unit 10 into the staining unit 30. After the sample is subjected to the staining process in the staining unit 30, the conveying unit 20 can carry out the glass slide 1 on which the sample is placed from the staining unit 30 to the storage unit 11.

The staining unit 30 performs the staining process on the sample placed on the glass slide 1 after the glass slide 1 is carried from the supply unit 10 into the staining unit 30. A staining method used in the staining unit 30 is, for example, IHC staining or ISH staining.

A disk 31 capable of performing a rotation operation is provided inside the staining unit 30. A plurality of stages 32 are provided on the disk 31. One glass slide 1 can be placed on each stage 32. The stage 32 includes a temperature adjustment mechanism 36 to be described later. The temperature adjustment mechanism 36 can change a temperature of the stage 32 and heat or cool the stage 32. When the temperature of the stage 32 is changed, a temperature of the glass slide 1 (sample) placed on the stage 32 is also changed.

A temperature sensor 40 and a humidity sensor 41 are provided inside the staining unit 30. The temperature sensor 40 is provided around the stage 32 and detects a temperature around the stage 32. The humidity sensor 41 is provided around the stage 32 and detects a humidity around the stage 32. The humidity sensor 41 is not essential.

Although not shown, a nozzle for supplying a chemical solution such as a buffer liquid, a reagent, and a washing solution necessary for the staining process is provided around the disk 31. A necessary chemical solution is supplied from the nozzle to the glass slide 1 according to a preset protocol.

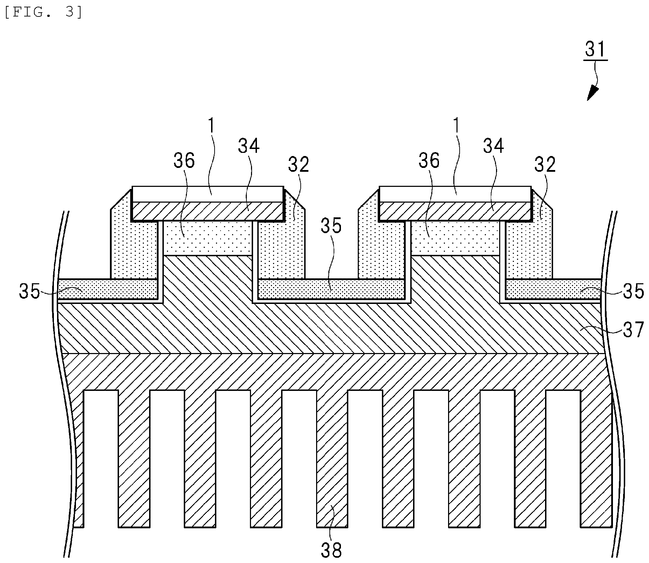

An example of a configuration of the disk 31 will be described below with reference to FIG. 3. FIG. 3 is a cross-sectional view showing a part of the disk 31. As shown in FIG. 3, the disk 31 includes, for example, a plurality of stages (holders) 32, a heat spreader 34, a fixing table 35, the temperature adjustment mechanism (heat pump) 36, a heat conduction plate 37, and a heat sink 38.

The stage 32 is a member that holds the glass slide 1 and the heat spreader 34. The fixing table 35 is a member that holds the stage 32. The stage 32 and the fixing table 35 are made of a resin material such as plastic or polycarbonate resin.

The glass slide 1 is placed on the heat spreader 34. The heat spreader 34 makes an in-plane temperature distribution of the glass slide 1 uniform. An area of the heat spreader 34 is preferably equal to or larger than an area of the glass slide 1. The heat spreader 34 is made of, for example, copper or a metal material containing, copper, or aluminum as a main component.

The temperature adjustment mechanism 36 is provided below the heat spreader 34. The temperature adjustment mechanism 36 includes, for example, a Peltier element, and can adjust the temperature of one glass slide 1 to a desired temperature. In the example in FIG. 3, the disk 31 includes a plurality of stages 32, a plurality of heat spreaders 34, and a plurality of temperature adjustment mechanisms 36, and a plurality of glass slides 1 can be placed thereon. In this case, the temperatures of the glass slides 1 can be individually adjusted by the temperature adjustment mechanisms 36.

The heat conduction plate 37 is provided below the fixing table 35 and the temperature adjustment mechanism 36. The heat conduction plate 37 connects the temperature adjustment mechanism 36 and the heat sink 38 and facilitates dissipation of heat from the temperature adjustment mechanism 36 to the heat sink 38. The heat conduction plate 37 is made of a material having excellent thermal conductivity, for example, a metal material containing aluminum or copper as a main component.

The heat sink 38 is provided as a radiator below the heat conduction plate 37. The heat sink 38 has, for example, a flat fin shape. The shape of the heat sink 38 may be a shape that can promote heat dissipation of the temperature adjustment mechanism 36, and may be a shape having a large surface area. The heat sink 38 is made of the material having excellent thermal conductivity, for example, the metal material containing aluminum or copper as the main component.

The heat sink 38 may be provided with a fan capable of blowing cooling air in order to further promote the heat dissipation. Further, directivity of the air from the fan may be improved by disposing a duct between the fan and the heat sink 38. The duct allows air from the fan to efficiently pass through a surface of the heat sink 38.

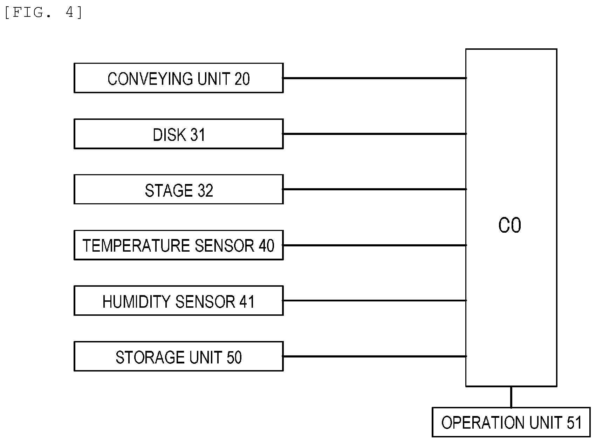

Hereinafter, a system of the sample processing device 100 according to Embodiment 1 will be described with reference to FIG. 4.

The sample processing device 100 includes a control unit C0. As shown in FIG. 4, the control unit C0 is electrically connected to the conveying unit 20, the disk 31, the stages 32, the temperature sensor 40, the humidity sensor 41, the storage unit 50, and the operation unit 51, and controls these components. The control unit C0 is a computer system including various semiconductor devices such as a CPU.

The control unit C0 controls each conveyance operation performed by the conveying unit 20. For example, the control unit C0 controls an operation of gripping or detaching the glass slide 1 by the grip portion 21, an operation of carrying the glass slide 1 from the supply unit 10 to the staining unit 30 by the conveying unit 20, and an operation of carrying out the glass slide 1 from the staining unit 30 to the storage unit 11 by the conveying unit 20.

The control unit C0 controls each operation performed by the disk 31. For example, the rotation operation of the disk 31 is controlled by the control unit C0. Although not shown here, a nozzle for supplying a chemical solution to the glass slide 1 is also controlled by the control unit C0.

The control unit C0 controls the temperature of the stage 32. For example, the temperature adjustment mechanism 36 such as the Peltier element provided inside the stage 32 can change the temperature of the stage 32 to a desired temperature by being controlled by the control unit C0.

The temperature detected by the temperature sensor 40 and the humidity detected by the humidity sensor 41 are transmitted to the control unit C0. The control unit C0 controls the temperature of the stage 32 according to the detected temperature and humidity.

The storage unit 50 stores pieces of data used in the sample processing device 100, such as time settings until the glass slide 1 is removed, protocols used for the staining process, and detailed data of each glass slide 1, which will be described later. Each piece of data is rewritten, erased, or read as needed under the control of the control unit C0. The storage unit 50 includes, for example, a flash memory or a hard disk.

The operation unit 51 is a device for an operator to issue a command to the control unit C0. The operation unit 51 includes an input device for an operator to input an instruction or the like, and a display device including a monitor or the like. The input device is, for example, a keyboard or a mouse. The operation unit 51 may be a touch panel having functions of the input device and the display device.

Hereinafter, an example of the staining process performed using the sample processing device 100 will be described.

In the supply unit 10, the glass slide 1 on which the sample is placed is mounted on the tray 12. The glass slide 1 is gripped by the grip portion 21 of the conveying unit 20, carried from the supply unit 10 to the staining unit 30 by the conveying unit 20, and placed on the stage 32 on the disk 31.

The stage 32 and the glass slide 1 move between nozzles disposed around the disk 31 by the rotation operation of the disk 31. The glass slide 1 is subjected to the staining process according to a preset protocol. In the protocol, a temperature, a time, a chemical solution to be supplied, and the like necessary for processes such as a deparaffinization process, an antigen retrieval process, and the staining process are set.

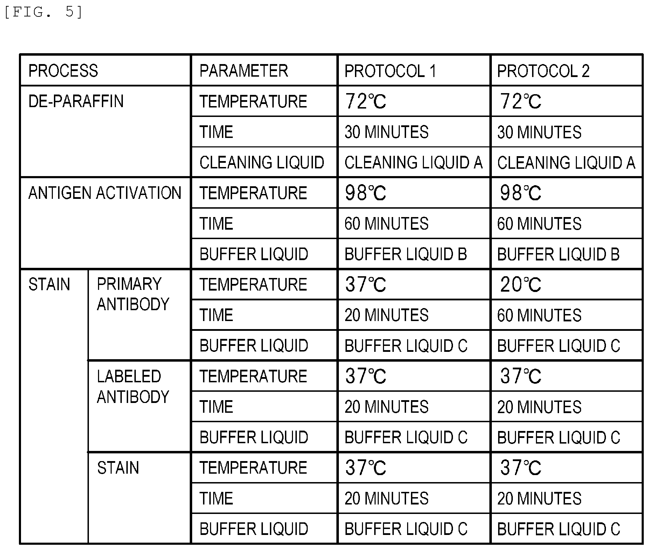

FIG. 5 shows an example of the protocol. In a protocol 1 shown in a table in FIG. 5, first, the glass slide 1 placed on the stage 32 is heated at 72°C for 30 minutes for the deparaffinization process. A washing solution A is supplied to the glass slide 1 while heating to wash away paraffin dissolved from the tissue. After 30 minutes, the heating is stopped, and a buffer liquid B is supplied to the glass slide 1. The washing solution A is washed away by the buffer liquid B.

Next, for the antigen retrieval process, the glass slide 1 is heated at 98°C for 60 minutes. The buffer liquid B is supplied to the glass slide 1 while heating to promote an antigen retrieval reaction. After 60 minutes, the heating is stopped, and a buffer liquid C is supplied to the glass slide 1. The buffer liquid B is washed away by the buffer liquid C.

Next, the glass slide 1 is heated to 37°C for the staining process. In the staining process, reagents such as a primary antibody, a labeled antibody, and a staining solution are added to the glass slide 1 at 37°C to stain a target antigen in the sample tissue.

In the protocol 1, a temperature setting during the staining process is 37°C. On the other hand, as in a protocol 2, the staining reaction may be performed at a lower temperature, for example, 20°C for a long time. Accordingly, it is known that a non-specific reaction of the antibody can be prevented to obtain a more suitable stained state. In this case, since a control temperature of the glass slide 1 is lower than an ambient environmental temperature, cooling control is performed using the temperature adjustment mechanism 36 or the like provided in the stage 32.

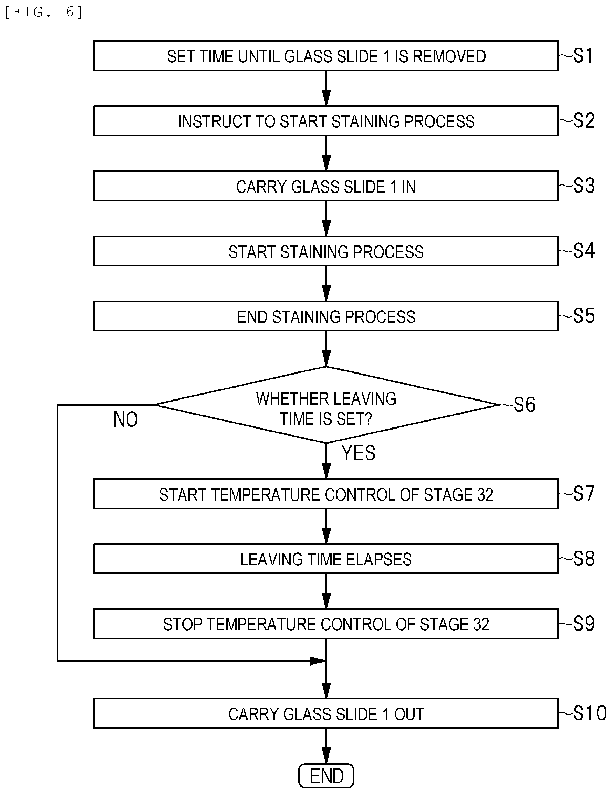

Hereinafter, a staining process method (steps S1 to S10) in Embodiment 1 will be described with reference to the flowchart in FIG. 6. The staining process method includes a method of preventing drying or evaporation of the sample on the glass slide 1 after the staining process (steps S6 to S9).

First, in step S1, before starting the staining process of the glass slide 1, the operator uses the operation unit 51 to set a time from an end of the staining process to the removal of the glass slide 1. The set time is stored in the storage unit 50. That is, the storage unit 50 stores a leaving time. During the leaving time, the glass slide 1 for which the staining process is ended in the staining unit 30 is left on the stage 32.

In the normal staining process, since the glass slide 1 is removed from the sample processing device 100 on a day when the staining process is ended, a setting of time is unnecessary. However, when staining is started at an end (for example, 17: 00) of work on Friday, the glass slide 1 is scheduled to be removed in the morning (for example, 8: 00) on Monday of the next week.

In step S2, after the time setting in step S1 is set to, for example, 60 hours, the operator presses a start button of the sample processing device 100 to start a series of work related to the staining process.

The work after step S3 is automatically performed by the control unit C0.

In step S3, the glass slide 1 on which the sample is placed is gripped by the grip portion 21 of the conveying unit 20, carried from the supply unit 10 to the staining unit 30 by the conveying unit 20, and placed on the stage 32 on the disk 31.

In step S4, the staining process is performed on the glass slide 1 according to the protocol as described with reference to FIG. 5, and the staining process ends in step S5.

In step S6, it is determined whether the leaving time is set in step S1. When the leaving time is not set (NO), the next step is step S10, and the glass slide 1 is carried out from the staining unit 30 to the storage unit 11 by the conveying unit 20 and mounted on the tray 13. When the leaving time is set (YES), the next step is step S7.

In step S7, the temperature control of the stage 32 is started in order to prevent drying or evaporation of the sample on the glass slide 1. The control unit C0 changes the temperature of the stage 32 such that the temperature of the stage 32 is lower than the temperature detected by the temperature sensor 40. The control unit C0 controls the temperature of the stage 32 within the leaving time stored in the storage unit 50.

The temperature of the stage 32 is preferably changed such that evaporation of water and condensation of water approach an equilibrium state. For example, the temperature of the stage 32 is changed to be lower than the temperature detected by the temperature sensor 40 by 0.5°C. Under this temperature control, an amount of condensation of water on the glass slide 1 slightly exceeds an amount of evaporation of water from the sample on the glass slide 1, and thus a state is maintained in which the sample is not dried.

At this time, by also using the humidity detected by the humidity sensor 41, it is possible to more precisely approach the equilibrium state between the evaporation of water and the condensation of water.

When the set leaving time elapses (step S8), the control unit C0 stops the temperature control of the stage 32 in step S9. For example, when the leaving time of 60 hours elapses, that is, at 5: 00 on Monday, the temperature control of the stage 32 is stopped.

In step S10, the glass slide 1 on the stage 32 is carried out from the staining unit 30 to the storage unit 11 by the conveying unit 20, and is mounted on the tray 13. The glass slide 1 collected on the tray 13 is timely removed by the operator.

As described above, according to the sample processing device 100 in Embodiment 1, even when the sample after the staining process is left for a long time, the sample can be prevented from drying or evaporating by automatically performing the temperature control of the stage 32.

### (Embodiment 2)

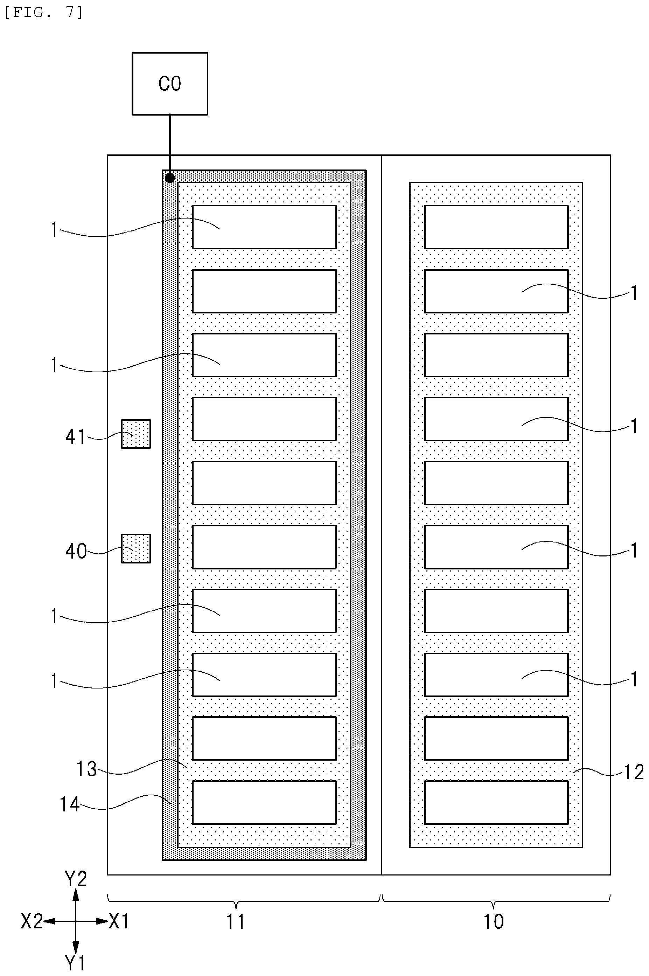

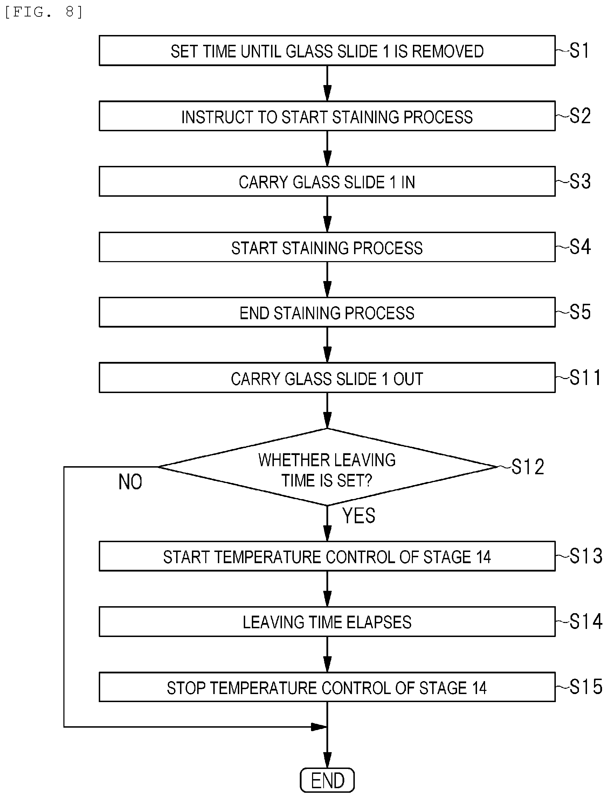

Hereinafter, the sample processing device 100 according to Embodiment 2 will be described with reference to FIGS. 7 and 8. In the following description, differences from Embodiment 1 will be mainly described, and description of points overlapping those of Embodiment 1 will be omitted.

In Embodiment 1, the stage 32 of the staining unit 30 includes the temperature adjustment mechanism 36. In Embodiment 2, the temperature adjustment mechanism 36 is provided in the storage unit 11. In Embodiment 2, it is assumed that the glass slide 1 for which the staining process is ended is left on the tray 13 of the storage unit 11 instead of the stage 32 of the staining unit 30.

As shown in FIG. 7, a stage 14 is provided inside the storage unit 11. The tray 13 similar to that of Embodiment 1 is provided on the stage 14. The glass slide 1 is placed on the stage 14 via the tray 13. The temperature sensor 40 and the humidity sensor 41 are provided around the stage 14. Similarly to the stage 32 according to Embodiment 1, the stage 14 includes the temperature adjustment mechanism 36.

The stage 14 is electrically connected to the control unit C0. The control unit C0 controls a temperature of the stage 14 according to the temperature detected by the temperature sensor 40 and the humidity detected by the humidity sensor 41. When the temperature of the stage 14 is changed, a temperature of the tray 13 placed on the stage 14 and the temperature of the glass slide 1 (sample) placed on the tray 13 are changed.

Hereinafter, the staining process method (steps S1 to S5 and S11 to S15) in Embodiment 2 will be described with reference to the flowchart in FIG. 8.

Since steps S1 to S5 in Embodiment 2 are the same as those in Embodiment 1, the description thereof will be omitted. In Embodiment 1, the leaving time stored in the storage unit 50 is the time during which the glass slide 1 is left on the stage 32, but in Embodiment 2, the leaving time stored in the storage unit 50 is a time during which the glass slide 1 is left on the tray 13.

After step S5, step S11 is performed. In step S11, the glass slide 1 for which the staining process is ended in the staining unit 30 is carried out from the staining unit 30 to the storage unit 11 by the conveying unit 20, and is mounted on the tray 13.

In step S12, it is determined whether the leaving time is set in step S1. When the leaving time is not set (NO), the glass slide 1 on the tray 13 is timely removed by the operator. When the leaving time is set (YES), the next step is step S13.

In step S13, the temperature control of the stage 14 is started in order to prevent drying or evaporation of the sample on the glass slide 1. The temperature control of the stage 14 performed by the control unit C0 in Embodiment 2 is the same as the temperature control of the stage 32 by the control unit C0 in Embodiment 1. The control unit C0 controls the temperature of the stage 14 within the leaving time stored in the storage unit 50.

When the set leaving time elapses (step S14), the control unit C0 stops the temperature control of the stage 14 in step S15. Thereafter, the glass slide 1 on the tray 13 is timely removed by the operator.

As described above, in Embodiment 2, even when the sample after the staining process is left for a long time, the sample can also be prevented from drying or evaporating by automatically performing the temperature control of the stage 14.

### (Embodiment 3)

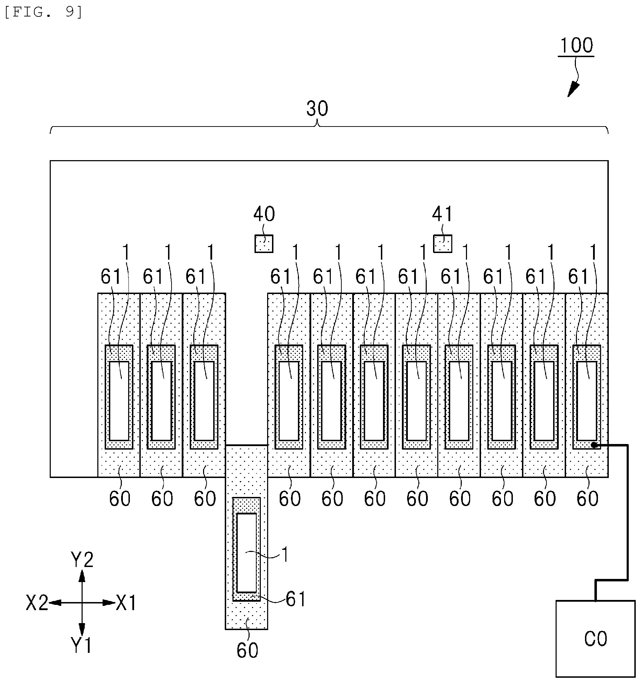

Hereinafter, the sample processing device 100 according to Embodiment 3 will be described with reference to FIG. 9. In the following description, differences from Embodiment 1 will be mainly described, and description of points overlapping those of Embodiment 1 will be omitted.

In Embodiment 1, the conveyance between the supply unit 10 or the storage unit 11 and the staining unit 30 is performed using the conveying unit 20 before and after the staining process. In the sample processing device 100 according to Embodiment 3, the conveying unit 20, the supply unit 10, and the storage unit 11 may not be provided.

As shown in FIG. 9, a plurality of drawer-shaped processing units 60 are provided inside the staining unit 30. A stage 61 is provided inside each processing unit 60. The glass slide 1 is placed on the stage 61. The temperature sensor 40 and the humidity sensor 41 are provided around the stage 61. Similarly to the stage 32 according to Embodiment 1, the stage 61 includes the temperature adjustment mechanism 36.

The stages 61 are electrically connected to the control unit C0. The control unit C0 controls a temperature of the stage 61 according to the temperature detected by the temperature sensor 40 and the humidity detected by the humidity sensor 41. When the temperature of the stage 61 is changed, a temperature of the glass slide 1 (sample) placed on the stage 61 is changed.

Since the staining process method according to Embodiment 3 is substantially the same as that of Embodiment 1, the description thereof will be omitted. In the staining process method according to Embodiment 3, differences from Embodiment 1 will be described below.

In step S1, the leaving time stored in the storage unit 50 is a time during which the glass slide 1 is left on the stage 61. The carry-in of the glass slide 1 in step S3 is performed by the operator pulling out the processing unit 60 in the Y1 direction, placing the glass slide 1 on the stage 61, and returning the processing unit 60 in the Y2 direction. The staining process in step S4 is performed in a state where the glass slide 1 is placed on the stage 61 inside the processing unit 60. The carry-out of the glass slide 1 in step S10 is performed by the operator pulling out the processing unit 60 in the Y1 direction, removing the glass slide 1 on the stage 61, and returning the processing unit 60 in the Y2 direction.

As described above, in Embodiment 3, even when the sample after the staining process is left for a long time, the sample can also be prevented from drying or evaporating by automatically performing the temperature control of the stage 61.

Although the invention has been specifically described based on the above-described embodiments, the invention is not limited to the above-described embodiments, and various modifications can be made without departing from the gist of the invention.

### Reference Signs List

100: sample processing device
1: glass slide
10: supply unit
11: storage unit
12: tray
13: tray
14: stage
20: conveying unit
21: grip portion
30: staining unit
31: disk
32: stage
34: heat spreader
35: fixing table
36: temperature adjustment mechanism (heat pump)
37: heat conduction plate
38: heat sink
40: temperature sensor
41: humidity sensor
50: storage unit
51: operation unit
60: drawer-shaped processing unit
61: stage
C0: control unit

## Claims

1. A sample processing device comprising:
a staining unit configured to perform a staining process on a sample placed on a glass slide;
a stage configured to allow the glass slide to be placed;
a temperature sensor provided around the stage; and
a control unit electrically connected to the stage and the temperature sensor, wherein
the stage includes a temperature adjustment mechanism configured to change a temperature of the stage, and
when the glass slide for which the staining process is ended in the staining unit is left on the stage, the control unit controls the temperature of the stage such that the temperature of the stage is lower than a temperature detected by the temperature sensor.

2. The sample processing device according to claim 1, wherein
the control unit controls the temperature of the stage such that evaporation of water and condensation of water approach an equilibrium state.

3. The sample processing device according to claim 1, further comprising:
a humidity sensor provided around the stage and electrically connected to the control unit, wherein
the control unit controls the temperature of the stage according to the temperature detected by the temperature sensor and a humidity detected by the humidity sensor.

4. The sample processing device according to claim 1, further comprising:
a storage unit electrically connected to the control unit, wherein
a time for controlling the temperature is stored in the storage unit, and
the control unit controls the temperature of the stage within the time stored in the storage unit.

5. The sample processing device according to claim 4, wherein
the time is a leaving time, and during the leaving time, the glass slide for which the staining process is ended in the staining unit is left on the stage.

6. The sample processing device according to claim 5, further comprising:
a disk provided inside the staining unit and capable of performing a rotation operation;
a conveying unit configured to convey the glass slide; and
a storage unit configured to store the glass slide after the staining process is performed, wherein
the stage is provided on the disk,
the control unit is electrically connected to the conveying unit and controls a conveyance operation of the conveying unit, and
after the leaving time elapses, the glass slide on the stage is carried out from the staining unit to the storage unit by the conveying unit.

7. The sample processing device according to claim 5, further comprising:
a drawer-shaped processing unit provided inside the staining unit, wherein
the stage is provided inside the processing unit, and
the staining process is performed inside the processing unit in a state where the glass slide is placed on the stage.

8. A sample processing device comprising:
a staining unit configured to perform a staining process on a sample placed on a glass slide;
a storage unit configured to store the glass slide after the staining process is performed;
a stage provided inside the storage unit;
a tray provided on the stage and configured to allow the glass slide to be mounted;
a temperature sensor provided around the stage; and
a control unit electrically connected to the stage and the temperature sensor, wherein
the stage includes a temperature adjustment mechanism configured to change a temperature of the stage, and
the control unit controls the temperature of the stage such that the temperature of the stage is lower than a temperature detected by the temperature sensor.

9. The sample processing device according to claim 8, wherein
the control unit controls the temperature of the stage such that evaporation of water and condensation of water approach an equilibrium state.

10. The sample processing device according to claim 8, further comprising:
a humidity sensor provided around the stage and electrically connected to the control unit, wherein
the control unit controls the temperature of the stage according to the temperature detected by the temperature sensor and a humidity detected by the humidity sensor.

11. The sample processing device according to claim 8, further comprising:
a conveying unit configured to convey the glass slide; and
a storage unit electrically connected to the control unit, wherein
the control unit is electrically connected to the conveying unit and controls a conveyance operation of the conveying unit,
the storage unit stores a time for controlling a temperature, and
the control unit controls the temperature of the stage within the time stored in the storage unit.

12. The sample processing device according to claim 11, wherein
the time is a leaving time during which the glass slide is left on the tray, the glass slide being carried from the staining unit to the storage unit by the conveying unit after the staining process in the staining unit is ended and mounted on the tray.
